# EUROPEAN PATENT APPLICATION

(11) **EP 4 744 889 A1**
(43) Date of publication of application: **20.05.2026**
(21) Application number: 24858701.6
(22) Date of filing: 30.08.2024
(51) Int. Cl.: B32B 17/10, C03C 27/12, B32B 7/12, B32B 3/22, B32B 27/18, B32B 33/00, B32B 27/30, B32B 27/36, B32B 27/40, B60J 1/00

(54) **LAMINATED GLASS AND VEHICLE**

(30) Priority: 30.08.2023 CN 202311107322
(71) Applicant: Fuyao Glass Industry Group Co., Ltd., Fuqing, Fujian 350300 (CN)
(72) Inventor: CHEN, Bingjing, Fujian 350300 (CN); LIN, Weida, Fujian 350300 (CN); JIANG, Bingming, Fujian 350300 (CN)
(74) Representative: Mewburn Ellis LLP
(86) International application number: PCT/CN2024/115683
(87) International publication number: WO 2025/045170

(57) **Abstract**

Provided are a laminated glass and a vehicle. The laminated glass includes a first glass, a second glass, and an adhesive layer laminated in sequence. The first glass is connected to the second glass via the adhesive layer. The adhesive layer includes an infrared-insulating film and an infrared-transmitting film. The infrared-insulating film defines a first opening, and the infrared-transmitting film is disposed in at least part of the first opening. The laminated glass includes a thermal-insulating portion and a wave-transmitting portion. The thermal-insulating portion corresponds to a region where the infrared-insulating film is located, and the wave-transmitting portion corresponds to a region where the infrared-transmitting film is located. The thermal-insulating portion has a light transmittance less than or equal to 45% for light in a waveband of 780 nm to 2500 nm, the thermal-insulating portion has a light transmittance equal to or greater than 70% for visible light, and the wave-transmitting portion has a light transmittance equal to or greater than 70% for light in the waveband of 780 nm to 2500 nm. The laminated glass provided in the present disclosure is provided with the thermal-insulating portion and the wave-transmitting portion, so that the laminated glass has a higher energy-insulating ratio and a higher light transmittance.

## Description

### CROSS-REFERENCE TO RELATED APPLICATION(S)

This application claims priority to Chinese Patent Application No. 20231107322.1, filed with the Chinese Patent Office on August 30, 2023 and entitled "LAMINATED GLASS AND VEHICLE", which is incorporated herein by reference in its entirety.

### TECHNICAL FIELD

This disclosure relates to the technical field of glasses, and in particular, to a laminated glass and a vehicle.

### BACKGROUND

With the increasingly widespread application of glasses, users have increasing demands for glasses. For a vehicle equipped with a laser radar inside, a signal of the laser radar needs to be transmitted through a vehicle window glass, so as to ensure normal operation of the laser radar and satisfy requirements of high-precision measurement. The vehicle window glass is required to have high transmittance for signals of a 905 nm laser radar or a 1550 nm laser radar. However, the window glass currently in use has a high insulating ratio to infrared light in a waveband of 780 nm to 2500 nm in order to meet a thermal-insulating requirement, and is unable to be meet usage requirements of the laser radar.

### SUMMARY

In a first aspect, a laminated glass is provided in the present disclosure. The laminated glass includes a first glass, a second glass, and an adhesive layer laminated in sequence. The first glass and the second glass is connected via the adhesive layer The adhesive layer includes an infrared-insulating film and an infrared-transmitting film, and the infrared-insulating film defines a first opening, and the infrared-transmitting film is disposed in at least part of the first opening. The laminated glass includes a thermal-insulating portion and a wave-transmitting portion, the thermal-insulating portion corresponds to a region where the infrared-insulating film is located, and the wave-transmitting portion corresponds to a region where the infrared-transmitting film is located. The thermal-insulating portion has a light transmittance less than or equal to 45% for light in a waveband of 780 nm to 2500 nm, the thermal-insulating portion has a light transmittance equal to or greater than 70% for visible light, and the wave-transmitting portion has a light transmittance equal to or greater than 70% for light in the waveband of 780 nm to 2500 nm.

In an embodiment, the thermal-insulating portion has a light transmittance less than or equal to 35% for light in a waveband of 850 nm to 950 nm, and the thermal-insulating portion has a light transmittance less than or equal to 10% for light in a waveband of 1500 nm to 1600 nm.

In an embodiment, the wave-transmitting portion has a light transmittance equal to or greater than 75% for light in a waveband of 850 nm to 950 nm, and the wave-transmitting portion has a light transmittance equal to or greater than 75% for light in a waveband of 1500 nm to 1600 nm.

In an embodiment, the first glass has a light transmittance equal to or greater than 75% for light in the waveband of 780 nm to 2500 nm, and the second glass has a light transmittance equal to or greater than 75% for light in the waveband of 780 nm to 2500 nm.

In an embodiment, the infrared-insulating film includes an infrared absorption film, and the infrared absorption film is configured to absorb light in the waveband of 780 nm to 2500 nm.

In an embodiment, a thickness of the infrared absorption film is 0.3mm to 2.3mm.

In an embodiment, the infrared-insulating film includes an infrared reflective film, and the infrared reflective film is configured to reflect light in the waveband of 780 nm to 2500 nm.

In an embodiment, a thickness of the infrared reflective film is 0.02 mm to 0.08 mm.

In an embodiment, the adhesive layer includes a first adhesive layer and/or a second adhesive layer, the first adhesive layer is disposed between the first glass and the infrared reflective film, and the second adhesive layer is disposed between the second glass and the infrared reflective film.

In an embodiment, the first adhesive layer defines a second opening, and the infrared-transmitting film is further filled into the second opening; or, the second adhesive layer defines a third opening, and the infrared-transmitting film is further filled into the third opening; or, the first adhesive layer defines the second opening, the second adhesive layer defines the third opening, and the infrared-transmitting film is further filled into the second opening and the third opening.

In an embodiment, the first adhesive layer has a thickness in a range of 0.3 to 2.3 mm, and the second adhesive layer has a thickness in a range of 0.3 to 2.3 mm.

In an embodiment, the first adhesive layer has a light transmittance equal to or greater than 70% for light in the waveband of 780 nm to 2500 nm, and the second adhesive layer has a light transmittance equal to or greater than 70% for light in the waveband of 780 nm to 2500 nm.

In an embodiment, the infrared-transmitting film includes at least one of a polyvinyl butyral film, an ethylene vinyl acetate film, a polycarbonate film, a polyvinyl chloride film, a polyacrylate film, a polymethyl methacrylate film, a polyurethane film, or an ionic polymer film.

In a second aspect, a vehicle is provided in the present disclosure. The vehicle includes a vehicle body, the laminated glass in the first aspect, and a laser radar. The laminated glass is mounted on the vehicle body. The laser radar is installed in the vehicle body, and the laser radar is configured to transmit/receive an electromagnetic wave signal of a wavelength of 780 nm to 2500 nm through the wave-transmitting portion of the laminated glass.

In the present disclosure, by providing the thermal-insulating portion and the wave-transmitting portion in a functional layer between the first glass and the second glass, the laminated glass has a high energy-insulating rate for light in a waveband of 780 nm to 2500 nm, and satisfies a light-transmittance requirement of the laser radar for light in a waveband of 780 nm to 2500 nm.

### BRIEF DESCRIPTION OF THE DRAWINGS

To describe technical solutions of the present disclosure more clearly, the following briefly introduces accompanying drawings required for describing embodiments. Apparently, the accompanying drawings in the following description show merely some embodiments of the present disclosure, and a person of ordinary skill in the art may still derive other drawings from these accompanying drawings without creative efforts.
FIG. 1 is a schematic structural view of a laminated glass provided according to the present disclosure.
FIG. 2 is a schematic cross-sectional view illustrating a layered structure of FIG. 1 taken along line A-A according to an embodiment.
FIG. 3 is a partial enlarged view an indicated region X in FIG. 2 according to an embodiment.
FIG. 4 is a partial enlarged view of the indicated region X in FIG. 2 according to another embodiment.
FIG. 5 is a schematic cross-sectional view illustrating a layered structure of FIG. 1 taken along line A-A according to an embodiment.
FIG. 6 is a diagram illustrating a relationship between wavelength and transmittance for a polyvinyl butyral (PVB) film and an infrared absorption film (i.e., solar control film).
FIG. 7 is a schematic cross-sectional view illustrating a layered structure of FIG. 1 taken along line A-A according to another embodiment.
FIG. 8 is a diagram illustrating a relationship between wavelength and transmittance for a PVB film, a polyethylene terephthalate (PET) film, and an infrared absorption film (i.e., solar control film).
FIG. 9 is a schematic cross-sectional view illustrating a layered structure of FIG. 1 taken along line A-A according to another embodiment.
FIG. 10 is a schematic cross-sectional structural sectional view of an infrared reflective film according to an embodiment.
FIG. 11 is a schematic cross-sectional structural view of an infrared reflective film according to another embodiment.
FIG. 12 is a schematic cross-sectional view illustrating a layered structure of FIG. 1 taken along line A-A according to another embodiment.
FIG. 13 is a partial enlarged view of an indicated region Y in FIG. 12 according to an embodiment.
FIG. 14 is a diagram illustrating a relationship between incidence angle and transmittance for a PVB film and an ethyl vinyl acetate (EVA) film.
FIG. 15 is a partial enlarged view of the indicated region Y in FIG. 12 according to another embodiment.
FIG. 16 is a partial enlarged view of the indicated region Y in FIG. 12 according to another embodiment.
FIG. 17 is a partial enlarged view of the indicated region Y in FIG. 12 according to another embodiment.
FIG. 18 is a schematic structural view of a vehicle according to the present disclosure.

### DETAILED DESCRIPTION

To enable a person of ordinary skill to better understand solutions of the present disclosure, technical solutions in embodiments of the present disclosure will be clearly and completely described below with reference to accompanying drawings in the embodiments of the present disclosure. It is apparent that the described embodiments are merely a part of embodiments of the present disclosure, rather than all of them. All other embodiments obtained by a person of ordinary skill in the art based on the embodiments of the present disclosure without creative efforts shall fall within the scope of protection of the present disclosure.

The terms "first", "second", etc., in the specification and claims of the present disclosure, as well as in the above drawings, are used to distinguish different objects and not to describe a particular order. Furthermore, the terms "comprise", "include", "have", and any variations thereof, are intended to cover a non-exclusive inclusion. For example, a process, method, system, product, or device that includes a series of steps or units is not limited to the listed steps or units but may optionally include steps or units not listed, or may optionally further include other steps or units inherent to such processes, methods, products, or devices.

The technical solutions in the embodiments of the present disclosure will be described below with reference to the accompanying drawings.

It may be noted that, for ease of description, in the embodiments of the present disclosure, the same reference numerals denote the same components, and for the sake of brevity, detailed descriptions of the same components are omitted in different embodiments.

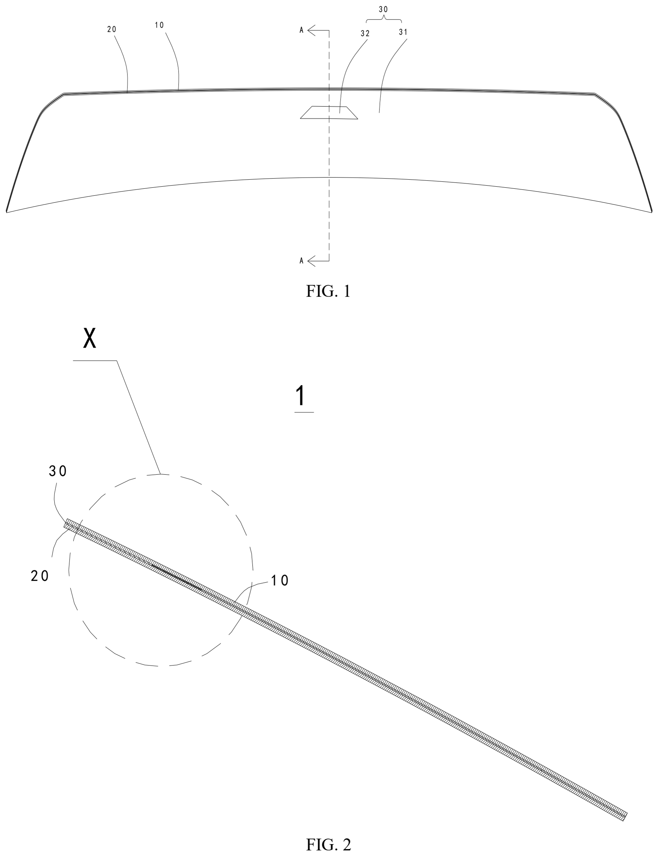

Reference is made to FIGS. 1 to 3, the present disclosure provides a laminated glass 1, which includes a first glass 10, a second glass 20, and an adhesive layer 30 laminated in sequence. The first glass 10 and the second glass 20 are connected via the adhesive layer 30. The adhesive layer 30 includes an infrared-insulating film 33 and an infrared-transmitting film 34. The infrared-insulating film 33 defines a first opening 331, and the infrared-transmitting film 34 is disposed in at least part of the first opening 331. The laminated glass 1 includes a thermal-insulating portion 31 and a wave-transmitting portion 32. The thermal-insulating portion 31 corresponds to a region where the infrared-insulating film 33 is located. The wave-transmitting portion 32 corresponds to a region where the infrared-transmitting film 34 is located. The thermal-insulating portion 31 has a light transmittance less than or equal to 45% for light in a waveband of 780 nm to 2500 nm. The thermal-insulating portion 31 has a light transmittance equal to or greater than 70% for visible light, and the wave-transmitting portion 32 has a light transmittance equal to or greater than 70% for light in the waveband of 780 nm to 2500 nm.

The laminated glass 1 provided in the present disclosure can be used as glass or doors and windows for vehicles, buildings, or the like, with better infrared reflection capability, thus enabling the laminated glass 1 with the adhesive layer 30 to have improved thermal insulation effect. For example, the laminated glass 1 may be installed on a vehicle, and in an embodiment, the laminated glass 1 is installed as a front windshield of the vehicle. In another embodiment, the laminated glass 1 is mounted on the vehicle as a rear windshield, a sunroof glass, or a side window glass. In the present disclosure, for illustrative purpose, the laminated glass 1 is installed as on a vehicle as a front windshield.

Specifically, the first glass 10 has a first surface 10a facing an exterior of the vehicle 80 and a second surface 10b facing an interior of the vehicle 80, and the second glass 20 has a third surface 20a facing the exterior of the vehicle 80 and a fourth surface 20b facing the interior of the vehicle 80. The first glass 10 and the second glass 20 are subjected to a bending molding treatment at a high temperature of at least 500°C. The thicknesses of the first glass 10 and the second glass 20 each are generally set in a range of 1.6 to 5.0 mm, for example, 1.6 mm, 1.8 mm, 2.1 mm, 2.3 mm, 3.2 mm, 3.5 mm, 4.0 mm, 4.5 mm, 5.0 mm, etc., and preferably 1.8 mm, 2.1 mm, 2.3 mm, and more preferably 1.8 mm, 2.1 mm. The first glass 10 and the second glass 20 each may be an ordinary clear glass having a light transmittance (LT) of 75% to 85% for light in a waveband of 800 nm to 2100 nm, preferably an ordinary clear glass having a light transmittance of 85% to 95% for light in an infrared waveband of 800 nm to 2100 nm, or a high-aluminum glass having a light transmittance of 86% to 96% for light in an infrared waveband of 780 nm to 2500 nm, or high-boron glass having a light transmittance of 86.5% to 96.5% for light in the infrared waveband of 780 nm to 2500 nm. Preferably, the first glass 10 has a light transmittance equal to or greater than 75% for light in the waveband of 780 nm to 2500 nm, and the second glass 20 has a light transmittance equal to or greater than 75% for light in the waveband of 780 nm to 2500 nm.

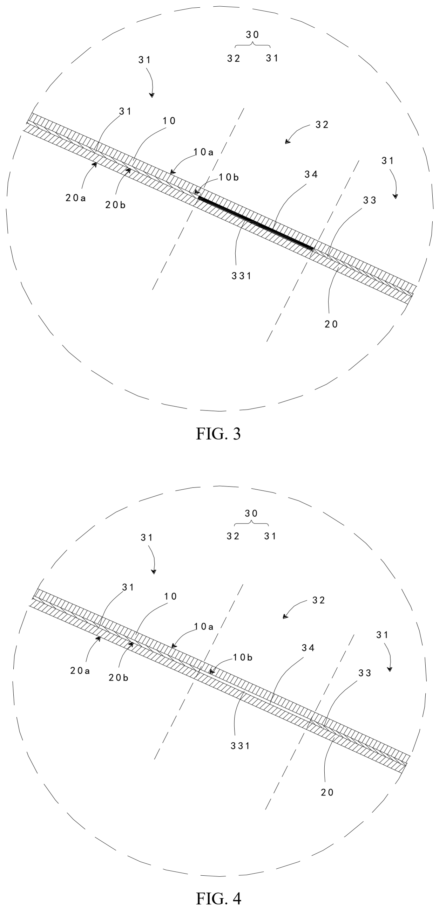

Reference is made to FIGS. 2 and 3, the adhesive layer 30 is used to bond the first glass 10 and the second glass 20 together, so that the laminated glass 1 has high structural stability. A region where the first glass 10, the infrared-insulating film 33, and the second glass 20 are sequentially stacked is the thermal-insulating portion 31, and a region where the first glass 10, the infrared-transmitting film 34, and the second glass 20 are sequentially stacked is the wave-transmitting portion 32. The thermal-insulating portion 31 is used for isolating heat outside the vehicle 80, and the wave-transmitting portion 32 is used for allow light in the waveband of 780 nm to 2500 nm to be transmitted.

It can be understood that, a thermal insulation effect of the thermal-insulating portion 31 depends on the material of the infrared-insulating film 33, and the infrared-insulating film 33 may be an infrared absorption film 311 or an infrared reflective film 321.

The thermal-insulating portion 31 has a light transmittance equal to or greater than 70% for visible light, and preferably has a light transmittance equal to or greater than 80% for visible light. This ensures high transparency of the laminated glass 1 and improves visual clarity for users.

It can be understood that the light transmission effect of the wave-transmitting portion 32 depends on the material of the infrared-transmitting film 34. The infrared-transmitting film 34 may be made of polycarbonate (PC), polyvinyl chloride (PVC), polyvinyl butyral (PVB), ethylene vinyl acetate (EVA), polyacrylate (PA), polymethyl methacrylate (PMMA), polyurethane (PUR), an ionic polymer film (i.e., SentryGlas Plus (SGP)), polyolefin elastomer, cyclic olefin polymer, thermoplastic polyurethane elastomer, cellulose triacetate, or other materials. This enables the light transmittance of the wave-transmitting portion 32 to be equal to or greater than 70% for light in the waveband of 780 nm to 2500 nm, and therefore, the wave-transmitting portion can allow a light signal in the waveband of 780 nm to 2500 nm to be transmitted.

In the present disclosure, by providing the thermal-insulating portion 31 and the wave-transmitting portion 32 in the adhesive layer 30 between the first glass 10 and the second glass 20, the laminated glass 1 has a high blocking rate for light in the waveband of 780 nm to 2500 nm, while satisfying the required transmittance for light in the waveband of 780 nm to 2500 nm.

Reference is made to FIG. 4, in an embodiment, the infrared-insulating film 33 defines a first opening 331, and the infrared-transmitting film 34 is disposed in the first opening 331. The first opening 331 extends through the infrared-insulating film 33. The shape of the first opening 331 includes, but is not limited to, rectangle, polygon, and ellipse. It can be understood that, a part of the infrared-insulating film 33 is removed in a specific region in the thermal-insulating portion 31 to define the first opening 331 without any infrared-transmitting film 34 being arranged therein, such that a hollowed-out structure is created between the first glass 10 and the second glass 20, specifically between the second surface 10b and the third surface 20a, thereby forming the wave-transmitting portion 32. The wave-transmitting portion 32 has a light transmittance equal to or greater than 85% for light in a waveband of 780 nm to 2500 nm. Preferably, the light transmittance of the wave-transmitting portion 32 for light in the infrared waveband of 780 nm to 2500 nm is in a range of 86.5% to 96.5%, so that infrared light can be transmitted and received inside the vehicle 80 through the wave-transmitting portion 32, thereby ensuring that the laser radar in the vehicle can work normally and has high detection precision.

Reference is made to FIG. 3 again, in another embodiment, the infrared-insulating film 33 defines a first opening 331, and the infrared-transmitting film 34 is disposed in the first opening 331. The first opening 331 extends through the infrared-insulating film 33. The shape of the first opening 331 includes, but is not limited to, rectangle, polygon, and ellipse. It can be understood that, a part of the infrared-insulating film 33 is removed in a specific region in the thermal-insulating portion 31, and then an infrared-transmitting film 34 is filled in the region to form the wave-transmitting portion 32. The wave-transmitting portion 32 has a light transmittance equal to or greater than 75% for light in the waveband of 780 nm to 2500 nm, so that infrared light can be transmitted and received inside the vehicle 80 through the wave-transmitting portion 32, thereby ensuring that the laser radar in the vehicle can work normally and has high detection precision. The infrared-transmitting film 34 disposed in the first opening 331 may have the same shape as the first opening 331, or the infrared-transmitting film 34 disposed in the first opening 331 may be formed by compressing a portion of the infrared-transmitting film 34 laminated on the infrared-insulating film 33 into the first opening 331 during a glass lamination process.

In some specific embodiments, when the adhesive layer 30 has a single-layer structure, the infrared-insulating film 33 defines the first opening 331, the infrared-transmitting film 34 is disposed in the first opening 331, and the area of the infrared-transmitting film 34 is equal to or slightly larger than that of the first opening 331.

When the adhesive layer 30 has a double-layer structure, that is, the adhesive layer 30 includes one infrared-insulating film 33 and one infrared-transmitting film 34 that are laminated together. The infrared-insulating film 33 defines the first opening 331, and the area of the infrared-transmitting film 34 is equal to that of the infrared-insulating film 33. After the laminated glass 1 is assembled, and subject to an initial pressing process and a high-pressure process, a portion of the infrared-transmitting film 34 corresponding to the first opening 331 may overflow into the first opening 331, so that the infrared-transmitting film 34 is disposed in at least part of the first opening 331.

When the adhesive layer 30 has a three-layer structure, that is, the adhesive layer 30 includes one infrared-insulating film 33 and two infrared-transmitting films 34 that are laminated in an order of one infrared-transmitting film 34, one infrared-insulating film 33, and another infrared-transmitting film 34. The infrared-insulating film 33 defines the first opening 331, and the area of the infrared-transmitting film 34 is equal to that of the infrared-insulating film 33. After the laminated glass 1 is assembled, and subject to an initial pressing process and a high-pressure process, a portion of the infrared-transmitting film 34 corresponding to the first opening 331 may overflow into the first opening 331, so that the infrared-transmitting film 34 is disposed in at least part of the first opening 331.

In one embodiment, the thermal-insulating portion has a light transmittance less than or equal to 35% for light in a waveband of 850 nm to 950 nm, and the thermal-insulating portion has a light transmittance less than or equal to 10% for light in a waveband of 1500 nm to 1600 nm. Preferably, the light transmittance of the thermal-insulating portion for light in the waveband of 850 nm to 950 nm may be 30%, 25%, 20%, or even 15%. The light transmittance of the thermal-insulating portion for light in the waveband of 1500 nm to 1600 nm may be 8%, 6%, 4%, or even 2%. The light transmittance of the wave-transmitting portion for light in the waveband of 850 nm to 950 nm is equal to or greater than 75%, and the light transmittance of the wave-transmitting portion for light in the waveband of 1500 nm to 1600 nm is equal to or greater than 75%. Preferably, the light transmittance of the wave-transmitting portion for light in the waveband of 850 nm to 950 nm may be 80%, 85%, 90%, or even 95%. The light transmittance of the wave-transmitting portion for light in the waveband of 1500 nm to 1600 nm may be 80%, 85%, 90%, or even 95%.

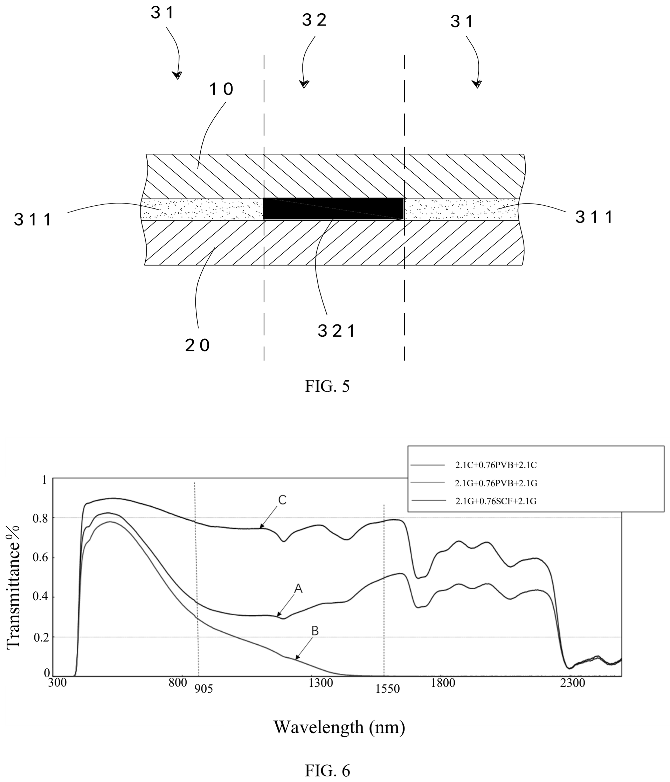

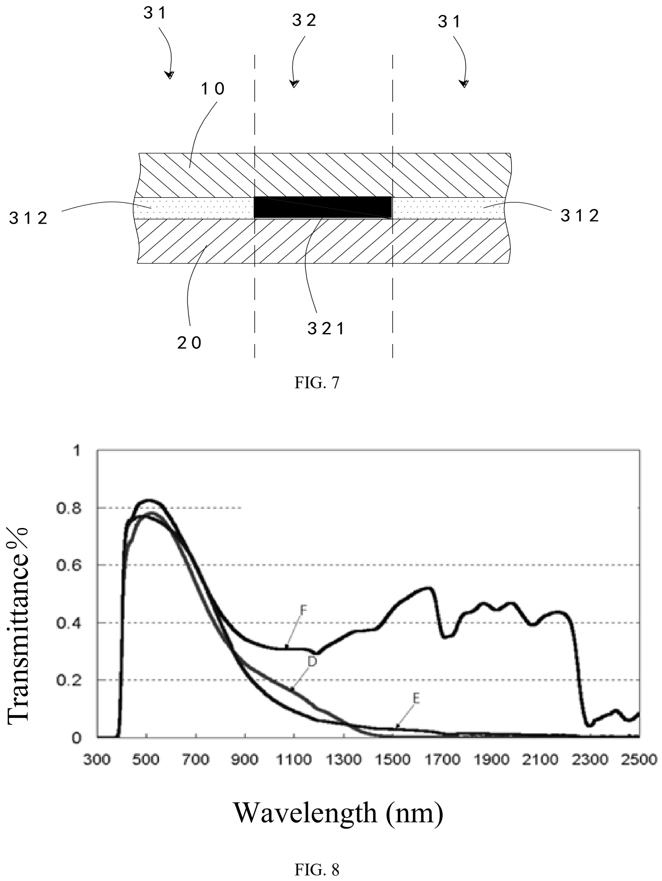

Reference is made to FIGS. 5 and 8, the infrared-insulating film 33 includes at least one of an infrared absorption film 311 or an infrared reflective film 321. The infrared absorption film 311 is configured to absorb light in the waveband of 780 nm to 2500 nm, and the infrared reflective film 321 is configured to reflect light in the waveband of 780 nm to 2500 nm. When the thermal-insulating portion 31 includes the infrared absorption film 311 and the infrared reflective film 321, the infrared absorption film 311 and the infrared reflective film 321 are stacked between the first glass 10 and the second glass 20, and the infrared reflective film 321 is arranged closer to the first glass 10 than the infrared absorption film 311.

Reference is made to FIG. 6, in an embodiment, the infrared-insulating film 33 includes the infrared absorption film 311, the infrared absorption film 311 has an absorptivity equal to or greater than 75% for light in the waveband of 780 nm to 2500 nm, and the infrared absorption film 311 has a thickness of 0.3 mm to 2.3 mm, such as, 0.38 mm, 0.51 mm, 0.76 mm, 0.81 mm, etc., and more preferably 0.76 mm.

The infrared absorption film 311 may be a thermoplastic resin film containing thermal-insulating particles, for example, a PVB film containing cesium-doped tungsten oxide (CWO) particles, a PVB film containing indium tin oxide (ITO) particles, or the like. The thermal-insulating particles may be metal oxide particles with high infrared shielding capabilities, for example, ITO particles, aluminum-doped tin oxide particles, antimony-doped tin oxide (ATO) particles, gallium-doped zinc oxide (GZO) particles, indium-doped zinc oxide (IZO) particles, aluminum-doped zinc oxide (AZO) particles, niobium-doped titanium oxide particles, sodium-doped tungsten oxide particles, CWO particles, thallium-doped tungsten oxide particles, rubidium-doped tungsten oxide particles, tin-doped zinc oxide particles, silicon-doped zinc oxide particles, or the like. To further improve the thermal insulation performance of the infrared absorption film 311, ITO particles or CWO particles are preferable. Further, an average particle size of the thermal-insulating particles is preferably 10 nm or more, more preferably 20 nm or more, preferably 200 nm or less, more preferably 100 nm or less, and still more preferably 50 nm or less. When the average particle diameter is not less than the lower limit, the shielding property against thermal radiation is sufficiently improved. When the average particle diameter is not more than the upper limit, the dispersion of the thermal-insulating particles is improved. In the infrared absorption film, the weight percentage of the thermal-insulating particles per hundred weight percentage is preferably 0.01% to 6%, more preferably 0.1% to 5.5%, even more preferably 1% to 4%, and particularly preferably 1.5% to 3.5%. When the content of the thermal-insulating particles is not less than the lower limit and not more than the upper limit, the thermal insulation performance is sufficiently improved, and the light transmittance for visible light is sufficiently improved.

Reference is made to FIG. 6, line A represents the light transmittance of a combination of an ordinary PVB film, the first glass, and the second glass for light in a waveband of 0 nm to 2500 nm, where both the first glass and the second glass are green glasses; line B represents the light transmittance of a combination of the infrared absorption film 311, the first glass, and the second glass for light in the waveband of 0 nm to 2500 nm, where both the first glass and the second glass are green glasses; and line C represents the light transmittance of a combination of an ordinary PVB film, the first glass, and the second glass for light in the waveband of 0 nm to 2500 nm, where both the first glass and the second glass are ordinary clear glasses. A waveband rang of visible light is 390 nm to 780 nm, and a waveband range of infrared light is 780 nm to 2500 nm. Obviously, the light transmittance of the combination of an ordinary PVB film and ordinary glasses for light in the waveband of 905 nm to 2500 nm is far higher than the light transmittance of the combination of an ordinary PVB film and green glasses and the transmittance of the combination of the infrared absorption film 311 and green glasses. Therefore, the thermal insulation effect of the combination of the ordinary PVB film and the ordinary glasses is not ideal. Further, starting from the 950 nm waveband, a difference between the light transmittance of the combination of the infrared absorption film 311, the first glass, and the second glass and the light transmittance of the combination of the ordinary PVB film, the first glass, and the second glass gradually increases, especially at the 1550 nm waveband, the transmittance of the combination of the infrared absorption film 311, the first glass, and the second glass is close to 0. Therefore, the infrared absorption film 311 is selected to achieve a relatively high thermal insulation effect. When light in a waveband of 780 nm to 2500 nm is incident on the laminated glass 1, the infrared absorption film 311 absorbs heat of light in the waveband of 780 nm to 2500 nm and blocks the heat on the first glass 10, and then heat accumulated on the first glass 10 is then dissipated into the surrounding air. In this embodiment, the infrared absorption film 311 is disposed at the thermal-insulating portion 31, so that the thermal-insulating portion 31 has thermal insulation performance.

Reference is made to FIGS. 7 and 8, in an embodiment, the infrared-insulating film 33 includes the infrared reflective film 321, and the infrared reflective film 321 has a reflectivity equal to or greater than 75% for light in a waveband of 780 nm to 2500 nm. The thickness of the infrared reflective film is in a range of 0.02 mm to 0.08 mm, e. g., 0.02 mm, 0.04 mm, 0.06 mm, 0.08 mm, etc., preferably 0.04 mm, 0.06 mm, and more preferably 0.06 mm.

The infrared reflective film 321 is configured to reflect light in the waveband of 780 nm to 2500 nm, and the infrared reflective film 321 may be a thermoplastic resin film with a metal plating layer, or may be a laminated film of multiple thermoplastic resin films. The thermoplastic resin film with the metal plating layer may specifically be formed by depositing at least one metal layer and at least two dielectric layers on a surface of the thermoplastic resin film. For example, the thermoplastic resin film with the metal plating layer may be a single-silver coated PET film, double-silver coated PET film, triple-silver coated PET film, and so on. The metal layer may specifically be a gold layer, a copper layer, a silver layer, a silver alloy layer, or the like. The gold layer, the copper layer, the silver layer, and the silver alloy layer have good infrared reflectivity, and can reduce transmittance of the laminated glass for infrared light. The material of the silver alloy layer is preferably a silver-copper alloy, a silver-indium alloy, a silver-gold alloy, etc., and the silver content in the silver alloy layer is preferably equal to or greater than 95%, and more preferably equal to or greater than 98%.The material of the dielectric layer may be a nitride, oxide or oxynitride of at least one element selected from a group consisting of Zn, Sn, Ti, Si, Al, Ni, Cr, Nb, Mg, Zr, Ga, Y, In, Sb, V and Ta, such as AZO, TiOₓ, ZnSnOₓ, Si₃N₄, etc. In some embodiments, when a laminated film of multiple thermoplastic resin films is selected as the infrared reflective film 321, the laminated film of multiple thermoplastic resin films may be a multi-layer resin film obtained by alternately or randomly laminating two or more thermoplastic resin layers having different refractive indexes in any number of layers. The number of laminated layers may be 20 to 1,000 layers, and specifically, for example, 20 layers, 50 layers, 80 layers, 100 layers, 120 layers, 150 layers, 200 layers, 300 layers, 400 layers, 500 layers, 600 layers, 700 layers, 800 layers, 900 layers, 1,000 layers, or the like. 100 to 500 layers are preferred.

As illustrated in FIG. 8, line D represents the light transmittance of the combination of the infrared absorption film 311, the first glass, and the second glass for light in a waveband of 0 nm to 2500 nm, where both the first glass and the second glass are green glasses; line E represents the light transmittance of the combination of an infrared reflective film 321, an ordinary PVB film, the first glass, and the second glass for light in the waveband of 0 nm to 2500 nm, where both the first glass and the second glass are ordinary clear glasses; and line F represents the light transmittance of the combination of the PVB film, the first glass, and the second glass for light in the waveband of 0 nm to 2500 nm, where the first glass and the second glass are green glasses. Apparently, the transmittance of the combination of the ordinary PVB film and the green glasses for light in the waveband of 905 nm to 2500 nm is much higher than that of the combination of the infrared absorption film 311 and the green glasses and that of the combination of the infrared reflective film 321, the ordinary PVB film, and the ordinary clear glasses, and therefore the thermal insulation effect of the combination of the ordinary PVB film and the green glasses is not ideal. Further, in a waveband of 850 nm to 900 nm, the thermal insulation effect of the combination of the infrared reflective film 321, the ordinary PVB film, the first glass, and the second glass is better than the thermal insulation effect of the combination of the infrared absorption film 311, the first glass, and the second glass, and therefore the infrared reflective film 321 is preferably used as the infrared-insulating film 33. In a waveband of 1500 nm to 1600 nm, the thermal insulation effect of the combination of the infrared absorption film 311, the first glass, and the second glass is better than that of the combination of the PET film, the PVB film, the first glass, and the second glass, and therefore the infrared absorption film 311 is preferably used as the infrared-insulating film 33. In an embodiment, when light in a waveband of 780 nm to 2500 nm is incident on the laminated glass 1, the infrared reflective film 321 reflects heat of the light in the waveband of 780 nm to 2500 nm, so that heat generated on the first glass 10 is reduced, thus preventing excessive temperature rise inside the vehicle. In this embodiment, the infrared reflective film 321 is disposed at the thermal-insulating portion 31, so that the thermal-insulating portion 31 has thermal insulation performance.

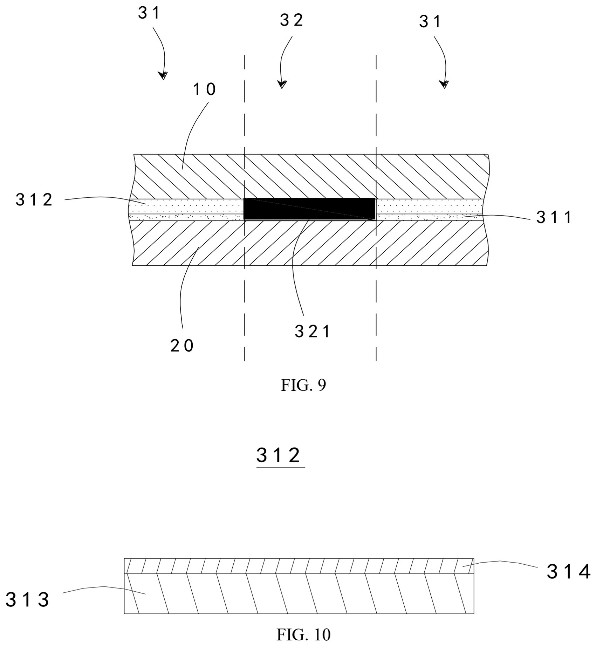

Reference is made to FIG. 9, in an embodiment, the thermal insulation portion 31 includes both the infrared absorption film 311 and the infrared reflective film 321, the infrared reflective film 321 is disposed on one side close to the first glass 10, the infrared absorption film 311 is disposed on one side close to the second glass 20, and the infrared absorption film 311 is stacked with the infrared reflective film 321. It can be understood that, when light in a waveband of 780 nm to 2500 nm is incident on the laminated glass 1, firstly, the infrared reflective film 321 reflects heat of light in the waveband of 780 nm to 2500 nm, then the infrared absorption film 311 absorbs heat of light in the waveband of 780 nm to 2500 nm and blocks the heat of light on the first glass 10, and then heat accumulated on the first glass 10 is then dissipated into the surrounding air. In this embodiment, the infrared reflective film 321 and the infrared absorption film 311 are sequentially disposed at the thermal-insulating portion 31 to improve the thermal-insulation efficiency of the thermal-insulating portion 31, thereby reducing the temperature inside the vehicle 80. Certainly, in other embodiments, the infrared absorption film 311 may also be disposed on one side close to the first glass 10, and the infrared reflective film 321 is disposed on one side close to the second glass 20.

Specifically, the infrared absorption film 311 may be a thermoplastic resin film containing thermal-insulating particles, for example, a PVB film containing CWO particles, a PVB film containing ITO particles, or the like. The infrared absorption film 311 converts solar light energy into thermal energy through an indium tin oxide layer, that is, absorbs heat in light in a waveband of 780 nm to 2500 nm and blocks the heat on the vehicle glass, and then dissipates the thermal energy into the air via the airflow outside the vehicle 80.

Further, the infrared reflective film 321 may be a thermoplastic resin film with a metal plating layer, or may be a laminated film of multiple thermoplastic resin films. The thermoplastic resin film with the metal plating layer may specifically be formed by depositing at least one metal layer and at least two dielectric layers on a surface of the thermoplastic resin film. For example, the thermoplastic resin film with the metal plating layer may be a single-silver coated PET film, double-silver coated PET film, triple-silver coated PET film, and so on. The metal layer may specifically be a gold layer, a copper layer, a silver layer, a silver alloy layer, or the like. The gold layer, the copper layer, the silver layer, and the silver alloy layer have good infrared reflectivity, and can reduce transmittance of the laminated glass for infrared light. The material of the silver alloy layer is preferably a silver-copper alloy, a silver-indium alloy, a silver-gold alloy, etc., and the silver content in the silver alloy layer is preferably equal to or greater than 95%, and more preferably equal to or greater than 98%.The material of the dielectric layer may be a nitride, oxide or oxynitride of at least one element selected from a group consisting of Zn, Sn, Ti, Si, Al, Ni, Cr, Nb, Mg, Zr, Ga, Y, In, Sb, V and Ta, such as AZO, TiOₓ, ZnSnOₓ, Si₃N₄, etc.

In some embodiments, reference is made to FIG. 10, the infrared reflective film 321 includes a substrate layer 313 and a silver layer 314. The substrate layer 313 may be made of PET. Due to relatively smooth characteristics of PET, a unique double-sided magnetron sputtering process is employed to sputter a highly reflective noble metal and a metal oxide on two sides of the PET substrate. It can be understood that, the infrared reflective film 321 is formed by coating a silver layer 314 on the substrate layer 313. In a hot climate, the silver layer 314 can isolate heat in the light of the waveband of 780 nm to 2500 nm from the outside of the vehicle 80 to cool the interior of the vehicle 80. In a cold climate, the silver layer 314 can trap heat in light of the waveband of 780 nm to 2500 nm generated by a human body, a household appliance, a gas, and the like inside the vehicle 80, thereby maintaining a warm interior in winter and a cool one in summer, significantly reducing the load on air conditioning and heating systems, and saving electricity costs. Therefore, the infrared reflective film 321 has a reflection effect on solar energy, reduces the total energy transmittance of the solar energy, and achieves a thermal insulation effect.

Optionally, because the silver layer 314 is made of a metal material, the infrared reflective film 321 has electrical conductivity. By adding a bus bar and a power supply input at two ends of the infrared reflective film 321 and applying a voltage or a current to the silver layer 314, the silver layer 314 generates heat. In this way, fogging, frost, or snow accumulation on the first surface 10a and second surface 10b of the first glass 10, as well as on the third surface 20a and fourth surface 20b of the second glass 20, which may be caused by significant indoor-outdoor temperature differences or cold environments, can be removed. When the laminated glass 1 is applied to a front windshield of a vehicle, the windshield maintains clear visibility even under conditions of large temperature differences or cold weather, thereby ensuring the driver has an unobstructed field of view.

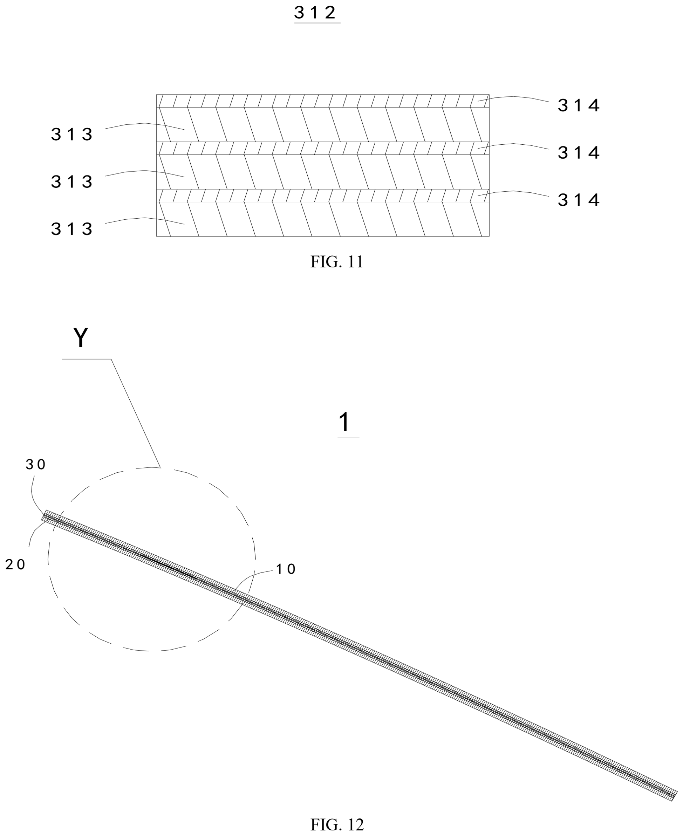

Reference is made to FIG. 11, in an embodiment, the infrared reflective film 321 includes multiple substrate layers 313 and multiple silver layers 314, and the multiple substrate layers 313 and the multiple silver layers 314 are laminated alternately in sequence. The substrate layer 313 is made of PET. First, a silver layer 314 is applied to one side of the substrate layer 313, followed by laying another substrate layer 313 on the opposite side of that silver layer 314, repeating this alternating arrangement. Preferably, three substrate layers 313 and three silver layer 314 are used. In addition, in this embodiment, by alternately stacking three layers each of the substrate layer 313 and the silver layer 314, the silver layer 314 can cover the substrate layer 313 as extensively as possible. This prevents the silver layer 314 from being too thin, which would result in poor reflection performance, or from being too thick, which would hinder the overall design toward lightweight construction and waste material.

Reference is made to FIGS. 12 to 13, the adhesive layer 30 further includes a first adhesive layer 41 and/or a second adhesive layer 42, the first adhesive layer 41 is disposed between the first glass 10 and the infrared reflective film 321, and the second adhesive layer 42 is disposed between the second glass 20 and the infrared reflective film 321.

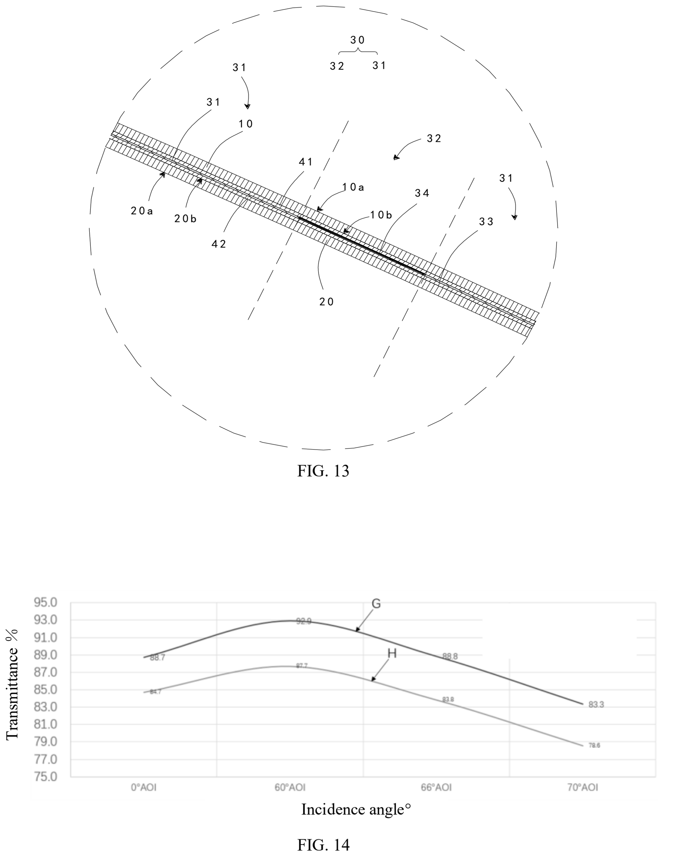

Reference is made to FIGS. 12 and 13 together, one side of the first adhesive layer 41 is adhered to the second surface 10b of the first glass 10, and the other side of the first adhesive layer 41 is adhered to one side of the infrared reflective film 321 close to the first glass 10. The first glass 10, the infrared reflective film 321, and the second glass 20 are sequentially adhered and molded by the first adhesive layer 41 and the second adhesive layer 42. The material of each of the first adhesive layer 41 and the second adhesive layer 42 may include at least one element selected from a group consisting of PVB, EVA, PC, PVC, PA, PMMA, PUR, and SGP. Preferably, each of the first adhesive layer 41 and the second adhesive layer 42 is made of PVB. The first adhesive layer 41 has a light transmittance equal to or greater than 70% for light in a waveband of 780 nm to 2500 nm, and preferably, the first adhesive layer 41 has a light transmittance of 75%, 80%, or 85% for light in the waveband of 780 nm to 2500 nm. The second adhesive layer 42 has a light transmittance equal to or greater than 70% for light in the waveband of 780 nm to 2500 nm, and preferably, the second adhesive layer 42 has a light transmittance of 75%, 80%, or 85% for light in the waveband of 780 nm to 2500 nm. Therefore, the first adhesive layer 41 and the second adhesive layer 42 have high light transmittance for visible light, so as to ensure high transparency of the laminated glass 1. The thickness of the first adhesive layer 41 is generally set between 0.3 mm and 2.3 mm, for example, 0.38 mm, 0.51 mm, 0.76 mm, 0.81 mm, etc., preferably 0.38 mm, 0.76 mm, and more preferably 0.76 mm. The thickness of the second adhesive layer 42 is generally set between 0.3 mm and 2.3 mm, for example, 0.38 mm, 0.51 mm, 0.76 mm, 0.81 mm, etc., preferably 0.38 mm, 0.76 mm, and more preferably 0.76 mm. Of course, in other embodiments,

Reference is made to FIG. 14, as illustrated in the figure, line G represents the light transmittance of the combination of an EVA film, the first glass, and the second glass for light in the waveband of 780 nm to 2500 nm incident from various angles; and line H represents the light transmittance of the combination of a PVB film, the first glass, and the second glass for light in the waveband of 780 nm to 2500 nm incident from various angles. The transmittance of the combination of the EVA film, the first glass, and the second glass for light in the waveband of 780 nm to 2500 nm ranges from 83.3% to 92.9%. The transmittance of the combination of the PVB film, the first glass, and the second glass for light in the waveband of 780 nm to 2500 nm ranges from 78.6% to 87.7%. Apparently, the laminated glass obtained by using the EVA film in combination with the first glass and the second glass has a higher light transmittance than the laminated glass obtained by using the PVB film in combination with the first glass and the second glass. Appropriate material can be selected based on practical requirements.

In an embodiment, a plasticizer is provided in each of the first adhesive layer 41 and the second adhesive layer 42, and the plasticizer is used for improving a sound insulating effect, where the content of the plasticizer in the first adhesive layer 41 is greater than the content of the plasticizer in the second adhesive layer 42.

Preferably, in order to reduce the overall thickness of the laminated glass 1 and achieve a thinner and lighter design, in this embodiment, the thickness of the first adhesive layer 41 is set to be 0.76 mm, and the thickness of the second adhesive layer 42 is set to be 0.38 mm. The thickness of the first adhesive layer 41 is set to be greater than the thickness of the second adhesive layer 42, so that the content of the plasticizer in the first adhesive layer 41 is higher than the content of the plasticizer in the second adhesive layer 42, so as to improve the sound insulating effect of the laminated glass 1. Of course, in other embodiments, the thickness of the first adhesive layer 41 may be set to be 0.38 mm, and the thickness of the second adhesive layer 42 may be set to be 0.76 mm. The present disclosure does not impose specific limitations, and all such variations fall within the scope of protection of the disclosure.

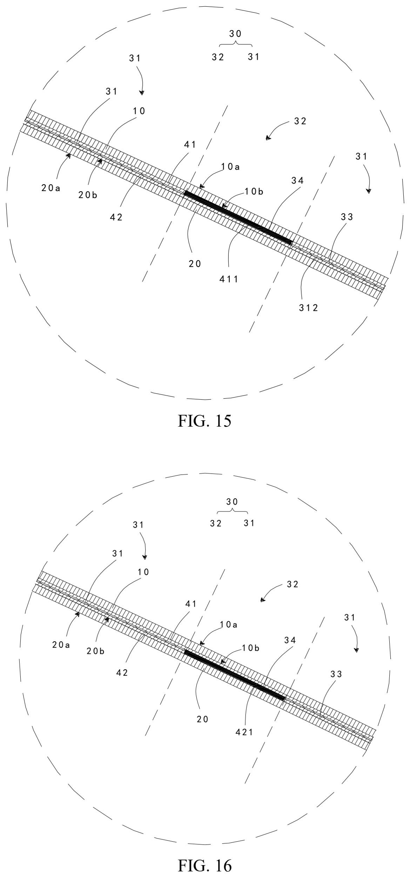

Reference is made to FIGS. 15 to 17 together, the first adhesive layer 41 defines a second opening 411, and the infrared-transmitting film 34 is further filled into the second opening 411. Alternatively, the second adhesive layer 42 defines a third opening 421, and the infrared-transmitting film 34 is further filled into the third opening 421; alternatively, the first adhesive layer 41 defines the second opening 411, the second adhesive layer 42 defines the third opening 421, and the infrared-transmitting film 34 is further filled into the second opening 411 and the third opening 421.

Reference is made to FIG. 15, in an embodiment, the first adhesive layer 41 defines the second opening 411, and the infrared-transmitting film 34 is laid in the second opening 411; Specifically, the adhesive layer 30 includes the first adhesive layer 41, the infrared reflective film 321, and the second adhesive layer 42 laminated in sequence, and the infrared reflective film 321 is sandwiched between the first adhesive layer 41 and the second adhesive layer 42. The orthographic projection of the infrared-transmitting film 34 on the second surface 10b of the first glass 10 passes through the first adhesive layer 41 and the infrared reflective film 321 sequentially to define the second opening 411, and the second opening 411 is used to accommodate the infrared-transmitting film 34. The wave-transmitting portion 32 may be made of at least one material selected from a group consisting of PVB, EVA, PC, PVC, PA, PMMA, PUR, and SGW. Preferably, the infrared-transmitting film 34 is made of PVB, and since PVB has high transparency and has a light transmittance equal to or greater than 75% for light in a waveband of 780 nm to 2500 nm, infrared light can effectively pass through the wave-transmitting portion 32. In the present embodiment, the infrared-transmitting film 34 has a thickness of 0.3 mm to 0.9 mm, for example, 0.43 mm, 0.56 mm, 0.81 mm, 0.86 mm, etc., and preferably 0.43 mm, 0.81 mm, and more preferably 0.81 mm. The thickness of the infrared-transmitting film 34 is the sum of the thickness of the first adhesive layer 41 and the thickness of the infrared reflective film 321. For example, if the thickness of the first adhesive layer 41 is 0.76 mm and the thickness of the infrared reflective film 321 is 0.05 mm, then the thickness of the infrared-transmitting film 34 is 0.81 mm, so as to guarantee an overall flatness between the infrared-transmitting film 34, and the first adhesive layer 41 and the infrared reflective film 321. Due to the high transparency of PVB, it exhibits low light absorption, particularly for light in the waveband of 850 nm to 950 nm. In particular, at the waveband of 905 nm, when the light at the waveband of 905 nm passes through the wave-transmitting portion 32, the infrared-transmitting film 34 using PVB as a substrate has a relatively high transmittance, so that the wave-transmitting portion 32 can better perform signal transmission on light at the waveband of 905 nm.

Reference is made to FIG. 16, in another embodiment, the second adhesive layer 42 defines the third opening 421, and the infrared-transmitting film 34 is laid in the third opening 421; Specifically, the adhesive layer 30 includes the first adhesive layer 41, the infrared reflective film 321, and the second adhesive layer 42 laminated in sequence, and the infrared reflective film 321 is sandwiched between the first adhesive layer 41 and the second adhesive layer 42. The orthographic projection of the infrared-transmitting film 34 on the third surface 20a of the second glass 20 passes through the second adhesive layer 42 and the infrared reflective film 321 sequentially to define the third opening 421, and the third opening 421 is used to accommodate the infrared-transmitting film 34. The infrared-transmitting film 34 may be made of at least one material selected from a group consisting of PVB, EVA, PC, PVC, PA, PMMA, PUR, and SGW. Preferably, the infrared-transmitting film 34 is made of PVB, and since the PVB has high transparency and has a light transmittance equal to or greater than 75% for light in a waveband of 780 nm to 2500 nm, infrared light can effectively pass through the wave-transmitting portion 3. In this embodiment, the infrared-transmitting film 34 has a thickness of 0.3 mm to 0.9 mm, for example, 0.43 mm, 0.56 mm, 0.81 mm, 0.86 mm, etc., preferably 0.43 mm, 0.81 mm, and more preferably 0.81 mm. The thickness of the infrared-transmitting film 34 is the sum of the thickness of the first adhesive layer 41 and the thickness of the infrared reflective film 321. For example, if the thickness of the first adhesive layer 41 is 0.76 mm and the thickness of the infrared reflective film 321 is 0.05 mm, then the thickness of the infrared-transmitting film 34 is 0.81 mm. so as to guarantee the overall flatness between the infrared-transmitting film 34, and the first adhesive layer 41 and the infrared reflective film 321. Due to the high transparency of PVB, it exhibits low light absorption, particularly for light in the waveband of 850 nm to 950 nm. In particular, at the waveband of 905 nm, when the light at the waveband of 905 nm passes through the wave-transmitting portion 32, the infrared-transmitting film 34 using PVB as a substrate has a relatively high transmittance, so that the wave-transmitting portion 32 can better perform signal transmission on light at the waveband of 905 nm.

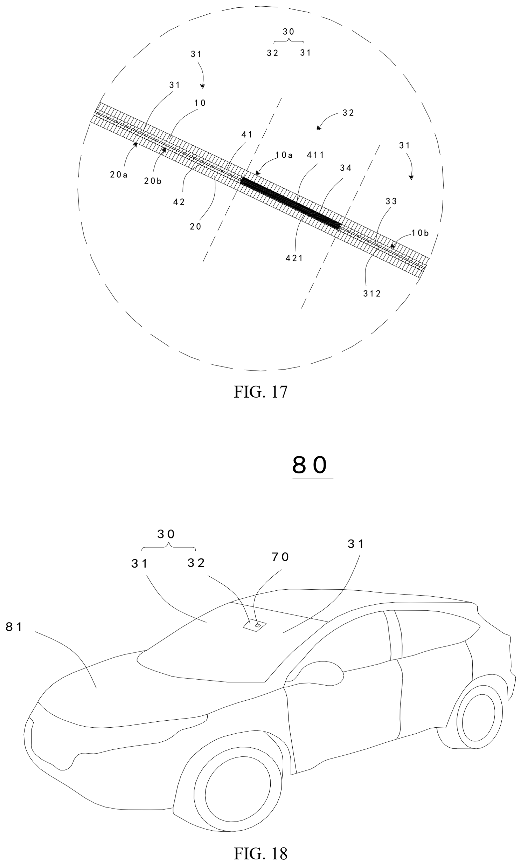

Reference is made to FIG. 17, in another embodiment, the first adhesive layer 41 defines the second opening 411, the second adhesive layer 42 defines the third opening 421, and the infrared-transmitting film 34 is laid on the second opening 411 and the third opening 421. Specifically, the adhesive layer 30 includes the first adhesive layer 41, the infrared reflective film 321, and the second adhesive layer 42 laminated in sequence, and the infrared reflective film 321 is sandwiched between the first adhesive layer 41 and the second adhesive layer 42. The orthographic projection of the infrared-transmitting film 34 on the second surface 10b of the first glass 10 sequentially passes through the first adhesive layer 41 and the infrared reflective film 321 to define the second opening 411, and the second opening 411 is used to accommodate the infrared-transmitting film 34. The orthographic projection of the infrared-transmitting film 34 on the third surface 20a of the second glass 20 sequentially passes through the second adhesive layer 42 and the infrared reflective film 321 to define the third opening 421, and the third opening 421 is used to accommodate the infrared-transmitting film 34. In the present embodiment, the infrared-transmitting film 34 has a thickness ranging from 1.0 mm, 0.6 mm to 1.7 mm, for example, 0.81 mm, 1.0 mm, 1.1 mm, 1.2 mm, 1.3 m, 1.4 mm, 1.5 mm, 1.57 mm, etc., and preferably 1.2 mm. The infrared-transmitting film 34 may be made of at least one material selected from a group consisting of PVB, EVA, PC, PVC, PA, PMMA, PUR, and SGW. Preferably, the wave-transmitting portion 32 is made of EVA, and the vinyl acetate content in EVA resin ranges from 5% to 40%, exhibiting high transparency. EVA is a thermosetting, crosslinkable resin. Through high-temperature decomposition of a cross-linking agent (peroxide), free radicals are generated, initiating a series of cross-linking reactions. This process transforms a molecular structure from linear to a cross-linked network. After cross-linking, the material shows significant improvements in properties such as strength, light transmittance, high-temperature creep resistance, solvent resistance, water resistance, resistance to damp-heat aging, resistance to ultraviolet irradiation aging, and resistance to yellowing. Due to the high transparency of EVA, it exhibits low light absorption, particularly for light in the waveband of 1500 nm to 1600 nm. In particular, at the waveband of 1550 nm, when the light at the waveband of 1550 nm passes through the wave-transmitting portion 32, the infrared-transmitting film 34 using EVA as a substrate has a relatively high transmittance, so that the wave-transmitting portion 32 can better perform signal transmission on light at the waveband of 1550 nm.

Reference is made to FIG. 18, the present disclosure further provides a vehicle 80, which includes a vehicle body 81, the laminated glass 1, and a laser radar 70. The laminated glass 1 is installed on the vehicle body 81, the laser radar 70 is installed in the vehicle body 81, the laser radar 70 is configured to transmit/receive an electromagnetic wave signal of a wavelength of 780 nm to 2500 nm through the wave-transmitting portion 32 of the laminated glass 1.

Specifically, the vehicle 80 may be, but is not limited to, a sedan, a multi-purpose automobiles (MPV), a sport/suburban utility vehicle (SUV), an off-road vehicle (ORV), a pickup, a minibus, a bus, a van, and the like.

Optionally, the mainstream choices for the laser radar 70 include 905nm laser radar 70 and 1550 nm laser radar 70. The 905 nm laser radar 70 utilizes infrared laser light with a wavelength of 905nm for information acquisition, and emits a laser beam as a detection signal to the surrounding three-dimensional space. When the laser beam strikes objects in the surrounding space and is reflected back as an echo signal, the laser radar 70 compares the received echo signal with a transmitted probe signal to obtain relevant information about the surrounding object, such as distance, and speed. The 1550 nm laser radar 70 operates on the same principle. The wave-transmitting portion 32 of the laminated glass 1 is configured to allow electromagnetic wave signals to be transmitted and received by the 905 nm laser radar 70 and the 1550 nm laser radar 70. The vehicle 80 equipped with one or more of the laser radars 70 has functions such as imaging, ranging, and positioning, so that the vehicle 80 can detect obstacles in its vicinity whether it is parked or in motion.

Embodiments of the present disclosure have been described in detail above. Specific examples are used herein to illustrate principles and implementation of the present disclosure. The descriptions of the above embodiments are only intended to facilitate understanding of the method and core concepts of the present disclosure. Moreover, for a person of ordinary skill in the art, based on the ideas of the present disclosure, there may be variations in specific implementations and scope of application. In summary, the content of this specification shall not be construed as limiting the present disclosure.

## Claims

1. A laminated glass, comprising a first glass, a second glass, and an adhesive layer laminated in sequence, the first glass and the second glass being connected via the adhesive layer;
wherein the adhesive layer comprises an infrared-insulating film and an infrared-transmitting film, the infrared-insulating film defines a first opening, and the infrared-transmitting film is disposed in at least part of the first opening; and
wherein the laminated glass comprises a thermal-insulating portion and a wave-transmitting portion, the thermal-insulating portion corresponds to a region where the infrared-insulating film is located, and the wave-transmitting portion corresponds to a region where the infrared-transmitting film is located; and the thermal-insulating portion has a light transmittance less than or equal to 45% for light in a waveband of 780 nm to 2500 nm, the thermal-insulating portion has a light transmittance equal to or greater than 70% for visible light, and the wave-transmitting portion has a light transmittance equal to or greater than 70% for light in the waveband of 780 nm to 2500 nm.

2. The laminated glass according to claim 1, wherein the thermal-insulating portion has a light transmittance less than or equal to 35% for light in a waveband of 850 nm to 950 nm, and the thermal-insulating portion has a light transmittance less than or equal to 10% for light in a waveband of 1500 nm to 1600 nm.

3. The laminated glass according to claim 1 or 2, wherein the wave-transmitting portion has a light transmittance equal to or greater than 75% for light in a waveband of 850 nm to 950 nm, and the wave-transmitting portion has a light transmittance equal to or greater than 75% for light in a waveband of 1500 nm to 1600 nm.

4. The laminated glass according to any one of claims 1 to 3, wherein the first glass has a light transmittance equal to or greater than 75% for light in the waveband of 780 nm to 2500 nm, and the second glass has a light transmittance equal to or greater than 75% for light in the waveband of 780 nm to 2500 nm.

5. The laminated glass according to any one of claims 1 to 4, wherein the infrared-insulating film comprises an infrared absorption film, and the infrared absorption film is configured to absorb light in the waveband of 780 nm to 2500 nm.

6. The laminated glass according to claim 5, wherein a thickness of the infrared absorption film is 0.3mm to 2.3mm.

7. The laminated glass according to claim 5 or 6, wherein the infrared absorption film is a thermoplastic resin film containing thermal-insulating particles.

8. The laminated glass according to any one of claims 1 to 7, wherein the infrared-insulating film comprises an infrared reflective film, and the infrared reflective film is configured to reflect light in the waveband of 780 nm to 2500 nm.

9. The laminated glass according to claim 8, wherein a thickness of the infrared reflective film is 0.02 mm to 0.08 mm.

10. The laminated glass according to claim 8 or 9, wherein the infrared reflective film is a thermoplastic resin film with a metal coating, or a laminated film of a plurality of thermoplastic resins films.

11. The laminated glass according to any one of claims 8 to 10, wherein the adhesive layer further comprises a first adhesive layer and/or a second adhesive layer, the first adhesive layer is disposed between the first glass and the infrared reflective film, and the second adhesive layer is disposed between the second glass and the infrared reflective film.

12. The laminated glass according to claim 11, wherein the first adhesive layer defines a second opening, and the infrared-transmitting film is further filled into the second opening; or,
the second adhesive layer defines a third opening, and the infrared-transmitting film is further filled into the third opening; or,
the first adhesive layer defines the second opening, the second adhesive layer defines the third opening, and the infrared-transmitting film is further filled into the second opening and the third opening.

13. The laminated glass of claim 11 or 12, wherein the first adhesive layer has a thickness in a range of 0.3 to 2.3 mm, and the second adhesive layer has a thickness in a range of 0.3 to 2.3 mm.

14. The laminated glass according to any one of claims 11 to 13, wherein the first adhesive layer has a light transmittance equal to or greater than 70% for light in the waveband of 780 nm to 2500 nm, and the second adhesive layer has a light transmittance equal to or greater than 70% for light in the waveband of 780 nm to 2500 nm.

15. The laminated glass according to any one of claims 1 to 14, wherein the infrared-transmitting film comprises at least one of a polyvinyl butyral film, an ethylene vinyl acetate film, a polycarbonate film, a polyvinyl chloride film, a polyacrylate film, a polymethyl methacrylate film, a polyurethane film, or an ionic polymer film.

16. The laminated glass according to any one of claims 1 to 15, wherein the infrared-transmitting film disposed in the first opening has a same shape as the first opening.

17. The laminated glass of any one of claims 1 to 4, wherein the adhesive layer comprises one infrared-insulating film and one infrared-transmitting film that are laminated, the infrared-insulating film defines the first opening, and the infrared-transmitting film corresponding to the first opening overflows into the first opening, to enable the infrared-transmitting film to be disposed in at least part of the first opening.

18. The laminated glass according to any one of claims 1 to 4, wherein the adhesive layer comprises one infrared-insulating film and two infrared-transmitting film that are laminated in an order of one infrared-transmitting film, one infrared-insulating film, and another infrared-transmitting film, the infrared-insulating film defines the first opening, the two infrared-transmitting films corresponding to the first opening overflow into the first opening, to enable the two infrared-transmitting films to be disposed in at least part of the first opening.

19. The laminated glass of claim 17 or 18, wherein an area of an infrared-transmitting film is equal to that of the infrared-insulating film.

20. A vehicle, comprising:
a vehicle body;
the laminated glass of any one of claims 1 to 19, wherein the laminated glass is mounted on the vehicle body; and
a laser radar installed in the vehicle body, wherein the laser radar is configured to transmit/receive an electromagnetic wave signal of a wavelength of 780 nm to 2500 nm through the wave-transmitting portion of the laminated glass.
